# EUROPEAN PATENT APPLICATION

(11) **EP 2 109 271 A1**
(43) Date of publication of application: **14.10.2009**
(21) Application number: 08103502.4
(22) Date of filing: 11.04.2008
(51) Int. Cl.: H04L 25/03

(54) **MIMO decoding method and apparatus thereof**

(71) Applicant: Alcatel-Lucent Deutschland AG, 70435 Stuttgart (DE)
(72) Inventor: Ohm, Michael, 70372, Stuttgart (DE)
(74) Representative: Richardt, Markus Albert

(57) **Abstract**

The present invention relates to a decoding method in a receiver for a mobile MIMO communication system, said MIMO communication system comprising a hybrid automatic retransmission request scheme, the method comprising the steps of: receiving first and second soft-information values of a first and a second codeword on a first time interval; storing said first and second soft-information values on a first and a second buffer; initiating a first decoding of said first codeword by adding said first soft-information values plus first previous soft-information values, wherein said first previous soft-information values are stored on a first additional buffer; and initiating a second decoding of said second codeword by adding said second soft-information values plus second previous soft-information values, wherein said second previous soft-information values are stored on said second additional buffer; obtaining first recalculated soft-information values by subtracting a first portion of a received signal from said received signal, wherein said first portion is of said second soft-information values; initiating a third decoding of said first codeword by adding said first recalculated soft-information values plus said first previous soft-information values, if said decoding of said first codeword fails and said decoding of said second codeword succeeds.

## Description

### Field of the invention

The invention relates to a decoding method for a mobile MIMO communication system, to a MIMO receiver and to a computer program product.

### Background and related art

In radio technologies, multiple input and multiple output or MIMO defines the use of multiple antennas at the transmitter and receiver in order to improve the communication performance. Further, it increases the data throughput and link range without additional bandwidth or transmit power. One of the main functions of MIMO is the spatial multiplexing that splits a high rate signal into multiple lower rate streams, transmitting each stream from a different transmit antenna in the same frequency channel. A MIMO channel can be modeled as having several transmit streams to go through a matrix channel consisting of multiple paths between multiple transmit antennas at the transmitter and multiple receive antennas at the receiver. The receiver gets the signals by multiple receiver antennas and decodes the received signal vectors into the original information.

In a multiple input multiple output (MIMO) spatial multiplexing transmission system with M antennas at the transmitter an N antennas at the receiver, up to a min(M,N) of independent data streams can be transmitted. These data streams are in general separately encoded. A successive interference cancellation (SIC) receiver can detect and decode the data streams so that if one data stream is successfully decoded, the decoded data is re-encoded, re-modulated and cancelled from the original received signal. As a result, spatial interference is reduced in the detection and decoding of the remaining data streams.

Hybrid automatic retransmission request (HARQ) is a variation of the automatic retransmission request (ARQ) error control method. In ARQ, error-detection information bits are added to data to be transmitted (such as the cyclic redundancy check, CRC). In hybrid ARQ, forward error correction bits are also added to the existing error detection bits (such as the turbo codes). In a possible implementation of HARQ, the transmitter adds both error-detection information and forward error correction information to each message prior to transmission. When the coded data block or code word is received, the receiver first decodes the error-correction code. If the channel quality is good enough, all transmission errors should be correctable, and the receiver can obtain the correct data block. If the channel quality is bad, and not all transmission errors can be corrected, the receiver will detect this situation using the error-detection code, then the received coded data block is discarded and a retransmission is requested by the receiver, similar to ARQ.

### Summary

The present invention provides a decoding method in a receiver for a mobile MIMO communication system, said MIMO communication system comprising a hybrid automatic retransmission request scheme, the method comprising the steps of: receiving first and second soft-information values of a first and a second codeword on a first time interval; storing said first and second soft-information values on a first and a second buffer; initiating a first decoding of said first codeword by adding said first soft-information values plus first previous soft-information values, wherein said first previous soft-information values are stored on a first additional buffer; and initiating a second decoding of said second codeword by adding said second soft-information values plus second previous soft-information values, wherein said second previous soft-information values are stored on said second additional buffer.

The method further comprises: obtaining first recalculated soft-information values by subtracting a first portion of a received signal from said received signal, wherein said first portion is of said second soft-information values, if said decoding of said first codeword fails and said decoding of said second codeword succeeds; initiating a third decoding of said first codeword by adding said first recalculated soft-information values plus said first previous soft-information values, if said decoding of said first codeword fails and said decoding of said second codeword succeeds.

The advantage of the embodiments is that the soft-information values are added to the additional buffer only after all possible interference has been reduced, or after all useful decoding attempts have been performed in the subframe. The additional buffer does not contain the superposition of soft-information from various decoding attempts, as these values are written to an additional buffer, and the decoding is performed on the sum of the soft-information values stored in the additional buffer and the additional buffer (first and second buffer). The soft-information values are also known as log-likelihood ratio values.

In an embodiment, the first and second additional buffer contain an accumulation of soft-information values of previous transmission attempts. In a further embodiment, the method further comprises: adding said first recalculated soft-information values to said first additional buffer, if said third decoding of said first codeword fails; flushing said first buffer; receiving third soft-information values from said first codeword on a second time interval; and storing said third soft-information values on said first buffer, if said third decoding of said first codeword fails.

In another embodiment, the method further comprises: adding said first soft-information values to said first additional buffer and said second soft-information values to said second additional buffer, if said decoding of said first and second codeword fails.

In a further embodiment, the method further comprises: obtaining said first recalculated soft-information values by subtracting said first portion of a received signal from said received signal, wherein said first portion is of said second soft-information values, if said decoding of said second codeword succeeds; and initiating a third decoding of said first codeword by adding said first recalculated soft-information values plus said first previous soft-information values, if said decoding of said second codeword succeeds.

In another embodiment, the first and second additional buffer contains soft-information values of a single transmission attempt. In a further embodiment, the method comprises: storing said first soft-information values on said first buffer and said second soft-information values on said second buffer; receiving third soft-information values from said first codeword and forth soft-information values from said second codeword on a second time interval, if said decoding of said first and second codeword fail; and storing said third soft-information values on a third soft-information buffer and said forth soft-information values on a forth soft-information buffer.

The method further comprises: initiating a third decoding of said first codeword by adding said first soft-information values, plus said third soft-information values, plus first previous soft-information values; initiating a forth decoding of said second codeword by adding said second soft-information values, plus said forth soft-information values, plus second previous soft-information values; and obtaining second and a third recalculated soft-information values by subtracting a second portion of said received signal from received signals of said first and second time interval, wherein said second portion is of said forth soft-information values, if said third decoding fails and said forth decoding succeeds.

Another advantage of the embodiments is that the interference cancellation can be performed in the current subframe (or time interval), as well as in previous subframes. If the codeword from a certain process (e.g. a HARQ process) is correctly decoded, the interference is cancelled from the received signal in the current subframe. Then, it is verified if there are remaining undecoded codewords of other data streams in previous subframes. If there are remaining undecoded codewords, the interference is reduced in the received signal in the corresponding previous subframes

In another embodiment, the method further comprises: obtaining second and third recalculated soft-information values by subtracting a second portion of said received signal from received signals of said first and second time interval, wherein said second portion is of said forth soft-information values, if said forth decoding succeeds.

In another aspect, the invention relates to a network element for a mobile MIMO communication system, being operable to perform in accordance with any one of the preceding claims. In an embodiment, the network element is a successive interference cancellation receiver. In an embodiment, the receiver resides in a mobile station. Alternatively, the receiver resides in a base station.

In another aspect, the invention relates to a MIMO mobile communication system for decoding, said mobile communication system being operable to perform in accordance with any one of the preceding embodiments.

In another aspect, the invention relates to a computer program product stored on a storage medium, comprising executable program means for causing a network element to perform a method according to any of the preceding embodiments, when said program is run on said network element.

### Brief description of the drawings

In the following preferred embodiments of the invention will be described in greater detail by way of example only making reference to the drawings in which:
- Figure 1: shows a block diagram of a decoding embodiment in a mobile MIMO communication system,
- Figure 2: shows a second block diagram of a receiver,
- Figure 3: shows a third block diagram of a further embodiment of the MIMO SIC receiver,
- Figure 4: shows a further embodiment of the data transmitted and received by a mobile MIMO communication system,
- Figure 5: shows a block diagram of a MIMO SIC receiver.

### Detailed description

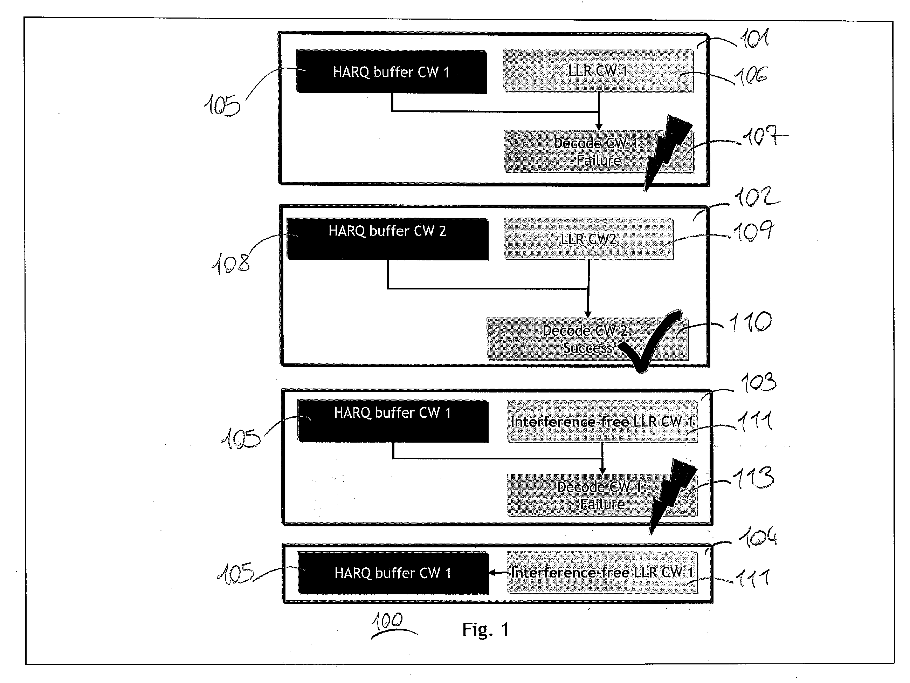

Fig. 1 shows a block diagram 100 of an embodiment of the MIMO SIC receiver and the decoding method in a first time interval. The block diagram 100 comprises four steps represented on the blocks 101-104. The first block 101 comprises a first additional buffer 105, a first soft-information buffer 106, and a result of the decoding 107. The second block diagram comprises a second additional buffer 108, a second soft-information buffer 109 and the result of the second decoding 110. Block 103 represents a second decoding attempt for the first code word and block 104 represents a further step in the decoding method.

On a MIMO system with two transmitter and two receiver antennas, two data streams can be generated. The bits from each data stream are grouped into transport blocks, channel encoded into codewords, mapped into symbols (e.g. QAM symbols) and then mapped to the physical resources within one subframe. In order to reconstruct the transmitted signal at the receiver, a spatial filter has to be designed, using the zero-forcing (ZF) or minimum-mean squared errors (MMSE) criteria.

On a first decoding attempt for a first code word received by the MIMO SIC receiver in a time interval or subframe 'n', the related soft-information values of the first code word are stored in the soft-information buffer 106. The first additional buffer 105 may contain an accumulation of soft-information values of previous transmission attempts from previous time intervals or subframes. Alternatively, the first additional buffer 105 may contain a soft-information value of a single transmission attempt from a previous time interval or subframe. In order to initiate a first decoding attempt of the first code word, the soft-information values stored in the buffers 105 and 106 are added and the result of the coding is represented in 107. The buffer 111 is the same buffer 106 with the recalculated values for the second decoding attempt. In the example of the first figure, this first decoding attempt fails for the first code word and the following steps of the decoding are represented on the block 102.

The second block diagram 102 describes a second additional buffer 108 and a second soft-information buffer 109 related to soft-information values or log-likelihood ratios from a second code word. In a similar way as with the first additional buffer, the second additional buffer 108 may contain an accumulation of soft-information values from previous transmission attempts on previous time intervals, or alternatively may contain soft-information value from a single transmission attempt on a previous subframe or time interval. The second buffer 109 contains the soft-information value from the most recent transmission attempt from the second code word. In order to decode the second code word, the values stored in the buffer 108 are added with the value stored in the buffer 109, and the result is represented in the block 110. In the example of this first figure, the decoding attempt for the second code word succeeds.

The successful decoding is indicated by a cyclic redundancy check (CRC) and the decoded code word is re-encoded, re-modulated and canceled from the first received signal and therefore from the detected signal, from which the first soft-information values corresponding to the first code word are derived. In that way, the spatial interference on the data stream related to the first code word is reduced improving the detection and the decoding on subsequent decoding attempts. This cancellation results in the first recalculated soft-information values that are stored on the first buffer represented on the block 111. These recalculated values are used on a second decoding attempt for the first code word and are added to the values of the first additional buffer, where the second decoding attempt fails, as shown on the block 113.

As the example described in Fig. 1 represents an SIC receiver for a MIMO system with only two independent data streams, one for each codeword, no further cancellations are possible. The recalculated soft-information values corresponding to the first code word are added to the first additional buffer, as shown in the block 104. The soft-information values stored in the second buffer 109 do not require to be added to the second additional buffer, as the next transmission will be an initial transmission from a new code word.

The embodiments of the method and apparatus described may comprise a MIMO transmission system with more than two data streams, dependent on the number of transmit antennas M and the number of received antennas N, where the maximum number of data streams is related to the minimum value between the numbers of transmit antennas and the number of receiver antennas. The HARQ scheme applied in the receiver may comprise any maximum number of transmissions greater than one and depending on the transmission number of the HARQ processes, the maximum number of transmissions, the cancellations and the re-computations can be applied in an unrestricted number of subframes. The cancellation in previous subframes is possible if:
- A given code word 'A' is correctly decoded at the k^{th} transmission of the HARQ process 'j',
- Previous subframes occupied by the HARQ process 'j' with transmission numbers 1 to k-1 of the correctly decoded code word 'A' contain other undecoded code words.

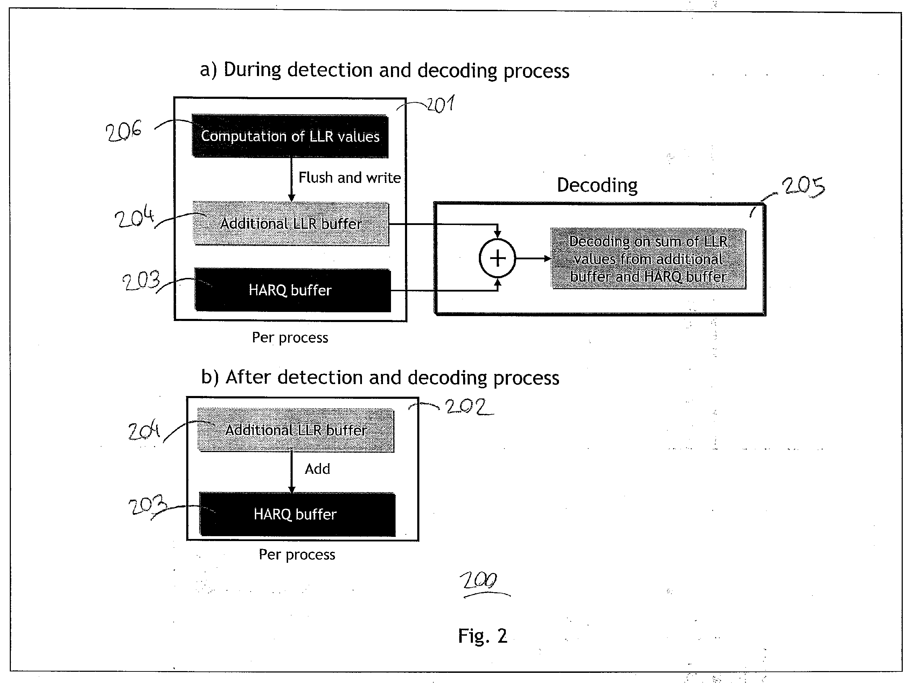

Fig. 2 shows a second block diagram 200 of the decoding process of the MIMO SIC receiver during and after a successive interference cancellation (SIC) and decoding process as shown in the block 201 and 202. The at least two buffers 203, 204 included in the MIMO SIC receiver are constantly used during the decoding attempts. The buffer 204 contains the most recent and newly computed soft-information values. The computation of the soft-information values is completed in 206. The addition of the values contains both buffers 203 and 204 is used during the decoding an attempt as described on the block 205.

After the SIC detection and the decoding process the values of the buffer 204 are added to the ARQ buffer 203 for all additional buffers belonging to not correctly decoded codewords, if the maximum number of transmissions has not been reached.

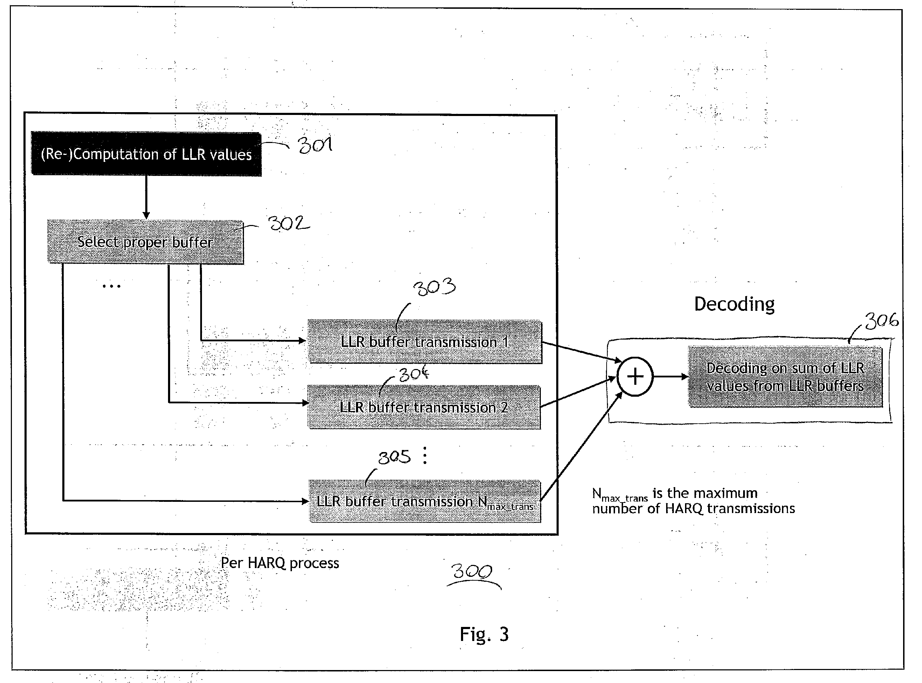

Fig. 3 shows a block diagram 300 of a MIMO SIC receiver when the cancellation is performed with values from the current and the previous subframes or time intervals. The receiver comprises three buffers 303-305, a selector 302, a computation of LLR values 301 and a decoding 306. In the embodiments there are as many buffers as the maximum number of transmission attempts from the system. If the code word in certain HARQ process of certain data stream is correctly decoded, the interference is cancelled from the receive signal in the current subframe and it is also checked if there are remaining undecoded code words of other data streams from previous subframes or time intervals. In the case that there are remaining undecoded code words, the interference from the correctly decoded code words is cancelled in the receive signals in the corresponding previous subframes.

The soft-information values correspond to those undecoded code words that are recomputed as shown in the block 301. A selector 302 selects the corresponding buffer that contains the soft-information values of the transmission attempt number of the recomputed soft-information values. There are as many buffers, 303-305, as the maximum number of transmissions for the HARQ process. Each buffer stores the information from a single transmission attempt, where the buffer 303 contains the soft-information values from the first transmission attempt for a corresponding code word on a first subframe. The addition of all the values 306 stored in the buffers 303-305 is used for the decoding from the code word of the HARQ process and if the decoding succeeds, that information can be used to cancel interference from another data stream.

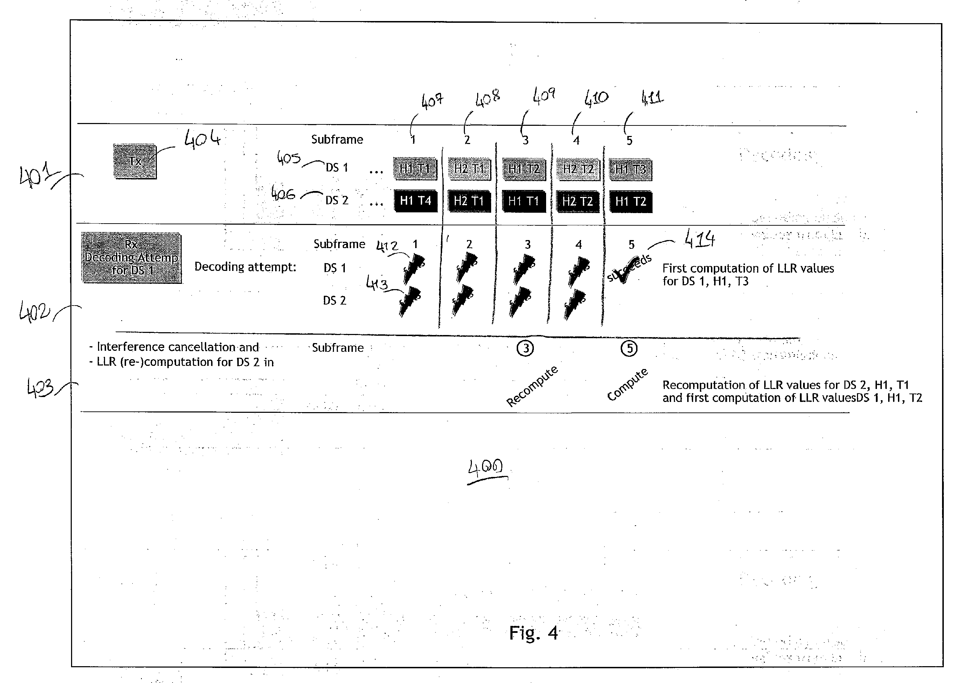

Fig. 4 shows a block diagram 400 comprising a description 401 of the transmitted data streams in five subsequent subframes, the decoding attempts 402 in the receiver and an analysis 403 of the potential current and previous subframes that can reduce the interference with the information of the successful decoded code word.

The transmitter 404 sends a first and a second data stream 405 and 406 during at least five subsequent time intervals 407-411. On a first subframe 407, the first transmission attempt of the first code word is initiated for the first data stream and this first decoding attempt fails, as shown in 412. Then, the decoding of a fourth transmission attempt for a second code word that corresponds to the second data stream also fails in 413. On a second time interval 408 a first transmission attempt from a second HARQ process fails to decode, as well as the first transmission attempt from a second HARQ process of the second data stream 406.

Subsequent failures from the time intervals 409 and 410 with the second transmission attempts from second HARQ process also fail, until the fifth subframe 411 is reached. The decoding from the third transmission attempt of the first HARQ process corresponding to the first data stream is successfully decoded 414. The information related to the decoding can be used to reduce the interference from the decoding of the current subframe for the second data stream 406. Alternatively, the interference cancellation can also be used in the first and the third subframe from the second data stream 406, but as the HARQ process of the first subframe has reached the maximum number of transmission, the code word has already been discarded. Therefore, there is no need to cancel that interference.

On a last step of the process, a re-computation of the log-likelihood ratio values for the first transmission attempt of the first HARQ process related to the second data stream is initiated, along to the first computation of the LLR values from data stream 2, HARQ process 1 and second transmission attempt from the fifth subframe. The subframes 408 and 410 cannot be used to reduce the interference, as they correspond to a different HARQ process from completely different received signals.

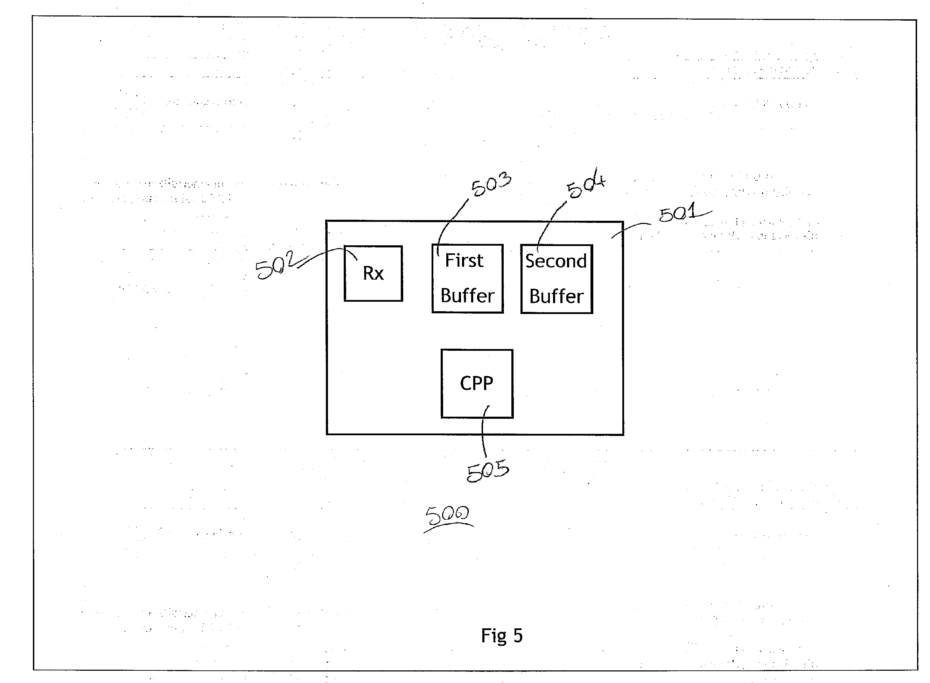

Fig. 5 shows a block diagram 500 of the MIMO SIC receiver 501 comprising a receiver 502, a first buffer 503, a second buffer 504 and a computer program product 505. The first buffer 503 contains the most recent soft-information values from the current subframe. The second buffer 504 contains an accumulation of soft-information values of previous transmission attempts. Alternatively, it contains information values of a single transmission attempt. The addition of the values stored in both buffers is used for every decoding attempt and the computation of any new log-likelihood ratio values is stored on the first buffer 503 after any previous information has been flushed from the first buffer 503. The computer program product 505 performs the method according to the embodiments.

### List of Reference Numerals

| | |
|---|---|
| 100 | First block diagram |
| 101 | First block |
| 102 | Second block |
| 103 | Third block |
| 104 | Forth block |
| 105 | First HARQ buffer |
| 106 | First buffer |
| 107 | Decoding result |
| 108 | Second HARQ buffer |
| 109 | Second buffer |
| 110 | Second decoding result |
| 111 | First buffer |
| 113 | Decoding result |
| 200 | Second block diagram |
| 201 | Decoding step |
| 202 | After decoding step |
| 203 | HARQ buffer |
| 204 | additional buffer |
| 205 | Sum and decoding |
| 206 | Values computation |
| 300 | MIMO receiver |
| 301 | Computation of LLR values |
| 302 | Buffer selection |
| 303 | First buffer |
| 304 | Second buffer |
| 305 | Third buffer |
| 306 | Sum and decoding |
| 400 | Decoding block diagram |
| 401 | Transmission step |
| 402 | Reception step |
| 403 | Interference cancellation |
| 404 | Transmitter |
| 405 | Data stream 1 |
| 406 | Data stream 2 |
| 407 | First subframe |
| 408 | Second subframe |
| 409 | Third subframe |
| 410 | Forth subframe |
| 411 | Fifth subframe |
| 412 | First decoding attempt |
| 413 | Forth decoding attempt |
| 414 | Third decoding attempt |
| 500 | Block diagram |
| 501 | MIMO receiver |
| 502 | receiver |
| 503 | First buffer |
| 504 | Second buffer |
| 505 | CPP |

## Claims

1. A decoding method in a network element (501) for a mobile MIMO communication system, said MIMO communication system comprising a hybrid automatic retransmission request scheme, the method comprising the steps of:
- receiving (502) first and second soft-information values of a first and a second codeword on a first time interval;
- storing said first and second soft-information values on a first (503) and a second buffer;
- initiating a first decoding (107) of said first codeword by adding said first soft-information values plus first previous soft-information values, wherein said first previous soft-information values are stored on a first additional buffer (504);
- nitiating a second decoding (110) of said second codeword by adding said second soft-information values plus second previous soft-information values, wherein said second previous soft-information values are stored on said second additional buffer;
- obtaining first recalculated soft-information values (111) by subtracting a first portion of a received signal from said received signal, wherein said first portion is of said second soft-information values, if said decoding of said first codeword fails and said decoding of said second codeword succeeds;
- initiating a third decoding (113) of said first codeword by adding said first recalculated soft-information values (111) plus said first previous soft-information values (105), if said decoding of said first codeword fails and said decoding of said second codeword succeeds.

2. The method as in claim 1, wherein said first and second additional buffer contains an accumulation of soft-information values of previous transmission attempts.

3. The method as in claim 1, wherein said first and second additional buffer contains soft-information values of a single transmission attempt.

4. The method as in claims 1 and 2 further comprising:
- adding said first recalculated soft-information values to said first additional buffer, if said third decoding of said first codeword fails;
- flushing said first buffer;
- receiving third soft-information values from said first codeword on a second time interval;
- storing said third soft-information values on said first buffer, if said third decoding of said first codeword fails.

5. The method as in claims 1 and 2 further comprising:
- adding said first soft-information values to said first additional buffer and said second soft-information values to said second additional buffer, if said decoding of said first and second codeword fails.

6. The method as in claims 1 and 2 further comprising:
- obtaining said first recalculated soft-information values by subtracting said first portion of a received signal from said received signal, wherein said first portion is of said second soft-information values, if said decoding of said second codeword succeeds;
- initiating a third decoding of said first codeword by adding said first recalculated soft-information values plus said first previous soft-information values, if said decoding of said second codeword succeeds.

7. The method as in claim 3 further comprising:
- storing said first soft-information values on said first buffer and said second soft-information values on said second buffer;
- receiving third soft-information values from said first codeword and forth soft-information values from said second codeword on a second time interval , if said decoding of said first and second codeword fails;
- storing said third soft-information values on a third soft-information buffer and said forth soft-information values on a forth soft-information buffer;
- initiating a third decoding of said first codeword by adding said first soft-information values, plus said third soft-information values, plus first previous soft-information values;
- initiating a forth decoding of said second codeword by adding said second soft-information values, plus said forth soft-information values, plus second previous soft-information values;
- obtaining second and third recalculated soft-information values by subtracting a second portion of said received signal from received signals of said first and second time interval, wherein said second portion is of said forth soft-information values, if said third decoding fails and said forth decoding succeeds.

8. The method as in claim 7 further comprising:
- obtaining second and third recalculated soft-information values by subtracting a second portion of said received signal from received signals of said first and second time interval, wherein said second portion is of said forth soft-information values, if said forth decoding succeeds.

9. A network element (501) for a mobile MIMO communication system, being operable to perform in accordance with any one of the preceding claims.

10. A network element (501) as in claim 9, wherein said network element is a successive interference cancellation (SIC) receiver.

11. A network element as in claim 10, wherein said network element is a mobile station.

12. A network element as in claim 10, wherein said network element is a base station.

13. A MIMO mobile communication system for decoding, said mobile communication system being operable to perform in accordance with any one of the preceding claims 1 to 8.

14. A computer program product (505) stored on a storage medium, comprising executable program means for causing a network element to perform a method according to any of the preceding claims 1 to 8 when said program is run on said network element.

## Amended claims

### Amended claims in accordance with Rule 137(2) EPC.

**1.** A decoding method in a network element (501) for a mobile MIMO communication system, said MIMO communication system comprising a hybrid automatic retransmission request scheme, the method comprising the steps of:
- receiving (502) first and second soft-information values of a first and a second codeword on a first time interval;
- storing said first and second soft-information values on a first (106) and a second (109) buffer, respectively;
- initiating a first decoding (107) of said first codeword by adding said first soft-information values plus first previous soft-information values, wherein said first previous soft-information values are stored on a first additional buffer (105);
- initiating a second decoding (110) of said second codeword by adding said second soft-information values plus second previous soft-information values, wherein said second previous soft-information values are stored on a second additional buffer (108);
- obtaining first recalculated soft-information values (111) by subtracting a first portion of a received signal from said received signal, wherein said first portion is of said second soft-information values, if said decoding of said first codeword fails and said decoding of said second codeword succeeds;
- initiating a third decoding (113) of said first codeword by adding said first recalculated soft-information values (111) plus said first previous soft-information values (105), if said decoding of said first codeword fails and said decoding of said second codeword succeeds.

**2.** The method as in claim 1, wherein said first and second additional buffers (105, 108) contain an accumulation of soft-information values of previous transmission attempts.

**3.** The method as in claim 1, wherein said first and second additional buffers (105, 108) contain soft-information values of a single transmission attempt.

**4.** The method as in claims 1 and 2 further comprising:
- adding said first recalculated soft-information values (111) to said first additional buffer (105), if said third decoding of said first codeword fails;
- flushing said first buffer (106);
- receiving third soft-information values from said first codeword on a second time interval;
- storing said third soft-information values on said first buffer (106), if said third decoding of said first codeword fails.

**5.** The method as in claims 1 and 2 further comprising:
- adding said first soft-information values to said first additional buffer (105) and said second soft-information values to said second additional buffer (108), if said decoding of said first and second codeword fails.

**6.** The method as in claims 1 and 2 further comprising:
obtaining said first recalculated soft-information values by subtracting said first portion of a received signal from said received signal, wherein said first portion is of said second soft-information values, if said decoding of said second codeword succeeds;
- initiating a third decoding of said first codeword by adding said first recalculated soft-information values plus said first previous soft-information values, if said decoding of said second codeword succeeds.

**7.** The method as in claim 3 further comprising:
- storing said first soft-information values on said first buffer (106) and said second soft-information values on said second buffer (109);
- receiving third soft-information values from said first codeword and fourth soft-information values from said second codeword on a second time interval, if said decoding of said first and second codeword fails;
- storing said third soft-information values on a third soft-information buffer and said fourth soft-information values on a fourth soft-information buffer;
- initiating a third decoding of said first codeword by adding said first soft-information values, plus said third soft-information values, plus first previous soft-information values;
- initiating a fourth decoding of said second codeword by adding said second soft-information values, plus said fourth soft-information values, plus second previous soft-information values;
- obtaining second and third recalculated soft-information values by subtracting a second portion of said received signal from received signals of said first and second time interval, wherein said second portion is of said fourth soft-information values, if said third decoding fails and said fourth decoding succeeds.

**8.** The method as in claim 7 further comprising:
- obtaining second and third recalculated soft-information values by subtracting a second portion of said received signal from received signals of said first and second time interval, wherein said second portion is of said fourth soft-information values, if said fourth decoding succeeds.

**9.** A network element (501) for a mobile MIMO communication system, comprising means for performing the method according to any one of the preceding claims.

**10.** A network element (501) as in claim 9, wherein said network element is a successive interference cancellation SIC receiver.

**11.** A network element as in claim 10, wherein said network element is a mobile station.

**12.** A network element as in claim 10, wherein said network element is a base station.

**13.** A MIMO mobile communication system, comprising a network element according to any of claims 9 to 12.

**14.** A computer program product (505) stored on a storage medium, comprising executable program means for causing a network element to perform a method according to any of the preceding claims 1 to 8 when said program is run on said network element.
